# EUROPÄISCHE PATENTSCHRIFT

(11) **EP 0 844 167 B1**
(45) Veröffentlichungstag und Bekanntmachung des Hinweises auf die Patenterteilung: **24.07.2002**
(21) Anmeldenummer: 97119120.0
(22) Anmeldetag: 03.11.1997
(51) Int. Cl.: B62D 29/00, B62D 21/09

(54) **Karosserieteil, insbesondere Profilrahmenträger**
Vehicle body part, in particular frame member.
Pièce de carrosserie de véhicule, en particulier poutre de châssis.

(30) Priorität: 21.11.1996 DE 19648164
(43) Veröffentlichungstag der Anmeldung: 27.05.1998
(73) Patentinhaber: Wilhelm Karmann GmbH, D-49084 Osnabrück (DE)
(72) Erfinder: Emmelmann, Hans-Joachim, Dr., 49074 Osnabrück (DE); Seeliger, Hans-Wolfgang, 49074 Osnabrück (DE)
(74) Vertreter: Busse & Busse Patentanwälte

(56) Entgegenhaltungen:
- EP-A- 0 383 498
- DE-A- 3 932 121
- DE-A- 19 546 352
- FR-A- 1 418 850
- GB-A- 910 251
- US-A- 4 269 890

## Beschreibung

Die Erfindung bezieht sich auf einen Profilrahmenträger für Karosserien von Kraftfahrzeugen nach dem Oberbegriff des Anspruchs 1 sowie auf ein Karosserieteil nach dem Oberbegriff des Anspruchs 5 und ein Verfahren nach dem Oberbegriff des Anspruchs 9.

Die gattungsgemäße DE 195 46 352 A offenbart Profilrahmenträger für Karosserien von Fahrzeugen, wobei ein von dem Profilrahmenträger umgrenzter Hohlraum mit einem Aluminiumschaumwerkstoff angefüllt und dadurch ausgesteift ist. Der Aluminiumschaumwerkstoff wird dabei entweder als Schmelze in den von dem Profilrahmenträger gebildeten Hohlraum eingegossen und in diesem aufgeschäumt, oder es wird außerhalb des Profilrahmenträgers zunächst der Aufschäumvorgang durchgeführt und aus dem fertig aufgeschäumten Block aus Schaumwerkstoff ein Stück in passender Größe zum Einsatz in den Profilrahmenträger ausgeschnitten.

Das Aufschäumen einer Schmelze in dem Profilrahmenträger erfordert jedoch eine hierfür geeignete Lage dieses Bauteils, das für das Ausgießen zumindest einseitig verschlossen sein muß. Ein Anfüllen eines bereits montierten oder in einer Baugruppe vormontierten Profilrahmenträgers im laufenden Produktionsverfahren mit Aluminiumschaum ist damit nicht möglich.

Das Einbringen vorgefertigter, einen Festkörper bildenden Aluminiumschaumblöcke in den Profilrahmenträger erfordert erstens ein paßgenaues Zurechtschneiden dieser Blöcke, so daß als Profilrahmenträger nur einfache Formen, wie etwa Vierkantprofile, in Frage kommen, zudem ist eine zusätzliche Festlegung der Schaumblöcke in dem Profilrahmenträger erforderlich, was den Montageaufwand und das Gewicht erhöht.

Demgegenüber liegt der Erfindung das Problem zugrunde, Profilrahmenträger bzw. andere, einen Hohlraum umgrenzende Karosserieteile derart auszubilden, daß einerseits eine maximale Flexibilität bei ihrer Herstellung und andererseits die Erfüllung eines breiten Spektrums von statischen und dynamischen Beanspruchungen, wie sie im Karosseriebereich auftreten, von den Bauteilen erfüllt werden kann.

Die Erfindung löst diese Problem mit einem Gegenstand mit den Merkmalen des Anspruches 1 bzw. des Anspruches 5 sowie mit einem Verfahren mit den Merkmalen des Anspruches 9.

Durch die Anordnung eines Strukturbauteils im Innern eines Profilrahmenträgers und die Ausschäumung des Zwischenraumes zwischen dem Strukturbauteil und dem Profilrahmenträger ist ein Bauteil gebildet, das sich als Rahmen- oder Versteifungselement im Kraftfahrzeug einsetzen läßt, beispielsweise als Windschutzscheibenrahmen oder Überrollbügel, insbesondere jedoch als tragendes Teil der Grundstruktur, etwa als Seitenschweller, wo schon bisher im Cabrioletbau in dem Profilrahmenträger angeordnete Rohre o.ä. zur Erhaltung der Torsionssteifigkeit unverzichtbar waren. Solche innenliegenden Strukturbauteile sind bisher vorzugsweise über stegartige Anformungen gegenüber dem äußeren Profilrahmenträger abgestützt.

Die Ausschäumung des Zwischenraumes ermöglicht eine flächige Abstützung des innenliegenden Strukturbauteils, so daß über den gesamten Verlauf des Profilrahmenträgers eine gleichmäßige Widerstandsfähigkeit gegen von außen auftretende Deformationen, insbesondere Knickdeformationen, wie sie bei einem Unfall auftreten, erreicht ist.

Durch den Einsatz eines metallischen Schaumwerkstoffes zur Anfüllung dieses Zwischenraumes ist gleichzeitig das Gewicht gesenkt, gegenüber bisherigen Bauteilen kann die Wandstärke des innenliegenden Strukturbauteils, insbesondere Rohres, gesenkt werden.

Ein Karosseriebauteil, das neben den mit metallischem Schaumwerkstoff, insbesondere Aluminiumschaumwerkstoff, angefüllten Bereichen noch Hohlräume enthält, die freibleiben, bietet die Möglichkeit, nur diejenigen Bereiche des Karosseriebauteils auszusteifen, die einer besonderen Belastung unterliegen. Dies können beispielsweise bei einem Windschutzscheibenrahmen die seitlich aufragenden Profile sein, die im Falle eines Überschlages vertikale Kraftkomponenten abzufangen haben.

Auch im Bereich von beispielsweise seitlichen Hohlräumen in Türen können solche teilweise ausgeschäumten Karosserieteile Verwendung finden, wobei die Ausschäumung jeweils an die Art der zu erwartenden Krafteinleitung angepaßt ist. Dadurch, daß nach der Erfindung Teilbereiche der Karosserieteile freibleiben können neben ausgeschäumten Bereichen des von dem Karosserieteil umgrenzten Hohlraums, wird die Möglichkeit einer erheblichen Gewichtseinsparung eröffnet. Besondere Anforderungen an die Lage und Anordnung des mit metallischem Schaumwerkstoff anzufüllenden Bauteils werden dabei nicht gestellt.

Mit dem Verfahren nach Anspruch 9 wird es ermöglicht, die Schaumwerkstoffteile soweit vorzubereiten, daß sie in verschiedenartigst geformten Karosserieteilen und Profilrahmenträgern eingesetzt und darin fertiggeschäumt werden können. Eine Einschränkung an den Innenquerschnitt eines Profilrahmenträgers ist daher nicht mehr erforderlich. Ebensowenig ist eine vertikale, einseitig geschlossene Einbaulage eines auszuschäumenden Profilträgers oder Karosserieteils notwendig, vielmehr kann das Einbringen der Schaumwerkstoffteile in dem laufenden Produktionsprozeß erfolgen, ohne eine Vorabfertigung der auszuschäumenden Bauteile durchführen zu müssen.

Weitere Vorteile und Einzelheiten ergeben sich aus der Zeichnung sowie der nachfolgenden Beschreibung mehrerer Ausführungsbeispiele des Gegenstandes der Erfindung.

In der Zeichnung zeigen:
- Fig. 1: die abgebrochene Seitenansicht einer Kraftfahrzeugkarosserie mit einem erfindungsgemäßen Profilrahmenträger im Schwellerbereich,
- Fig. 2: einen Schnitt entlang der Linie II-II aus Fig. 1,
- Fig. 3: eine abgebrochene Seitenansicht einer Kraftfahrzeugkarosserie mit einem erfindungsgemäßen Karosserieteil als Windschut zscheibenrahmen,
- Fig. 4: einen Schnitt entlang der Linie IV-IV aus Fig. 3, und
- Fig. 5: eine ähnliche Darstellung zu Fig. 4,
- Fig. 6: eine abgebrochene schaubildliche Darstellung eines Cabriolets mit Überrollbügel,
- Fig. 7: einen Schnitt entlang der Linie VII-VII aus Fig. 6.

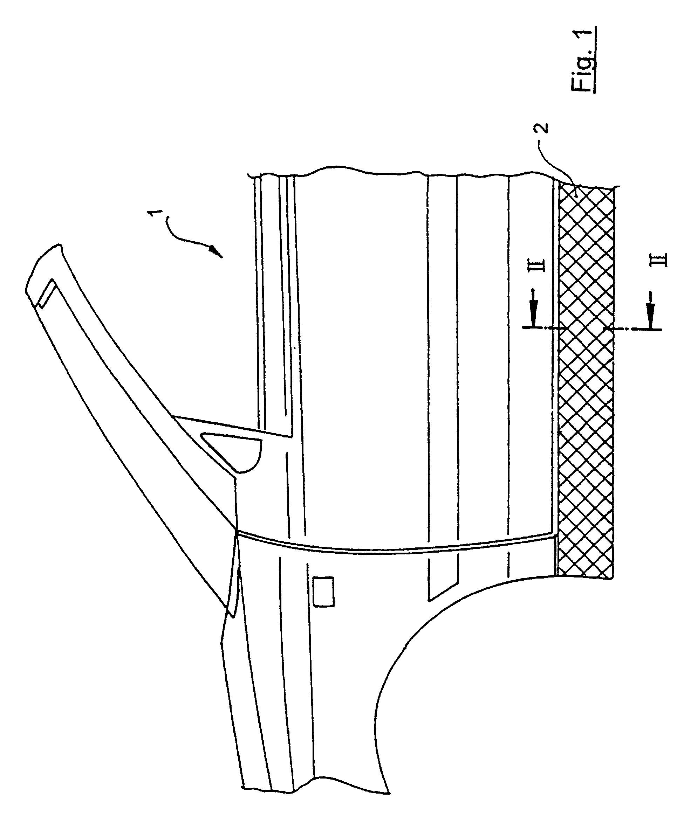

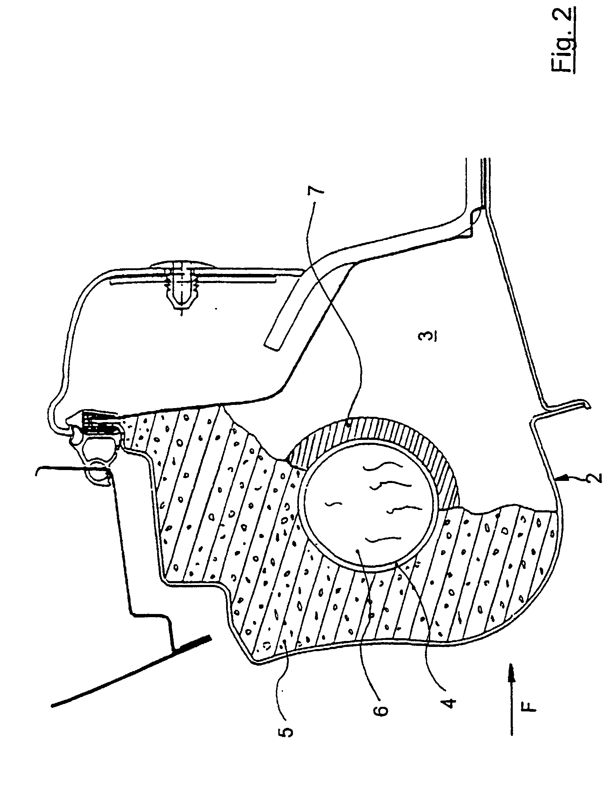

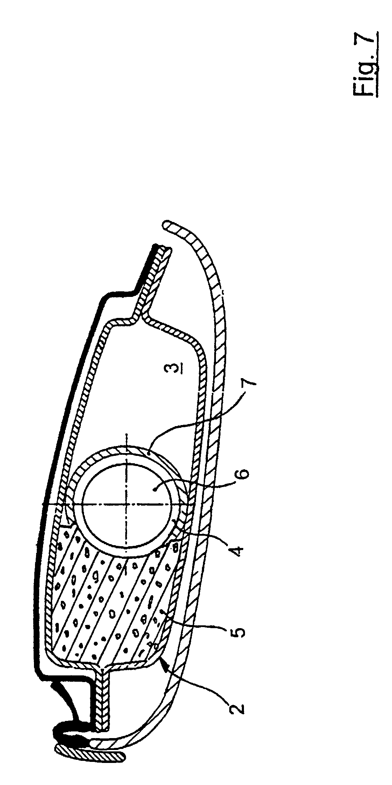

Im einzelnen weist ein erfindungsgemäßer Profilrahmenträger 2, der Teil einer Kraftfahrzeugkarosserie 1 ist und beispielsweise einen Seitenschweller (Fig. 1 und 2) oder einen Windschutzscheibenrahmen oder Überrollbügel (Fig. 6 und Fig. 7) ausbildet, einen innenliegenden Hohlraum 3 auf, in dem ein tragendes Rohr 4 angeordnet ist. Dieses Rohr 4 bildet ein Strukturbauteil der Karosserie und erstreckt sich in Längsrichtung des äußeren Profilrahmenträgers 2.

Der Hohlraum 3 zwischen dem innenliegenden Rohr 4 und dem ihn umgebenden Profilrahmenträger 2 ist im Endzustand der Teile von einem aufgeschäumten metallischen Schaumwerkstoff 5 eingenommen. Dadurch ist, etwa bei der seitlichen Einleitung einer Kraft in Richtung des Pfeiles F, eine großflächige Abstützung des Profilrahmenträgers 2 gegenüber dem innenliegenden Strukturbauteil 4 erreicht, so daß die auftretenden Kräfte besser als bei einer stegartigen Anbindung des Strukturbauteils 4 an den Profilrahmenträger 2 verteilt werden können und eine Knickdeformation des Bauteils erst bei erheblich größeren Kräften einsetzt bzw. bei gleicher Kraft geringer ausfällt. Sowohl die Steifigkeit des Seitenschwellers oder anderen Rahmenteils als auch seine Knickstabilität sind damit deutlich erhöht, gleichzeitig ist durch die gleichmäßige Ausschäumung des Hohlraums 3 die Widerstandsfähigkeit des Bauteiles gegen eine Krafteinleitung aus beliebiger Richtung erhöht.

Das innenliegende Strukturbauteil 4 kann verschiedenartig ausgeführt sein, beispielsweise als in Längsrichtung abgekantete Blech, als Massivkörper oder als Hohlprofil, insbesondere als Rohr. Auch kann es in Einzelfällen in Frage kommen, daß das innenliegende Strukturbauteil 4 ein Zugteil ausbildet, das verschiedene Bereiche eines Profilrahmenträgers 2, beispielsweise wenn dieser Knickstellen aufweist, zusammenhält.

Ein in dem Seitenschweller angeordnetes Rohr 4 erfüllt einerseits die Funktion, den Seitenschweller auszusteifen und gegen Knickdeformationen zu stabilisieren sowie die Torsionsfestigkeit der Karosserie 1 insgesamt zu erhöhen, andererseits kann der innenliegende Hohlbereich 5 des Rohres 4 als Führungskanal für Leitungen, insbesondere als Kabelkanal, genutzt werden.

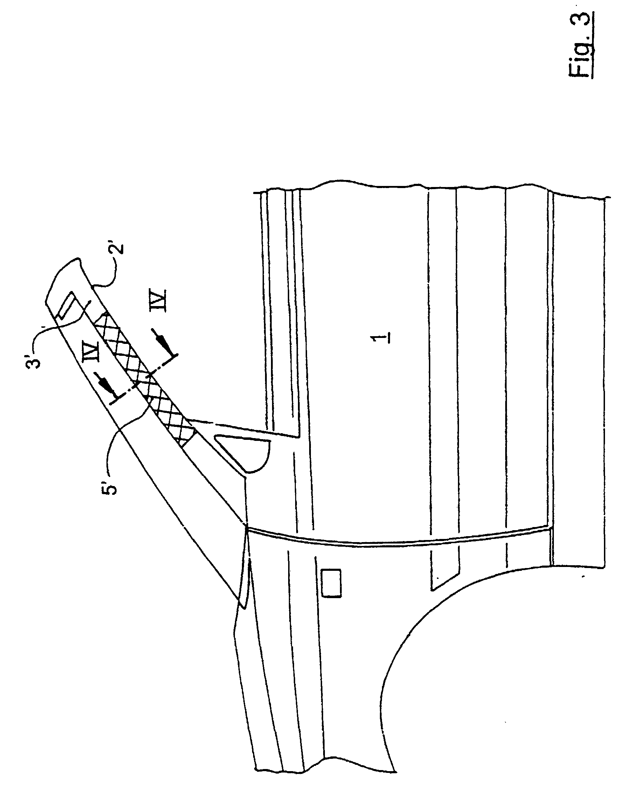

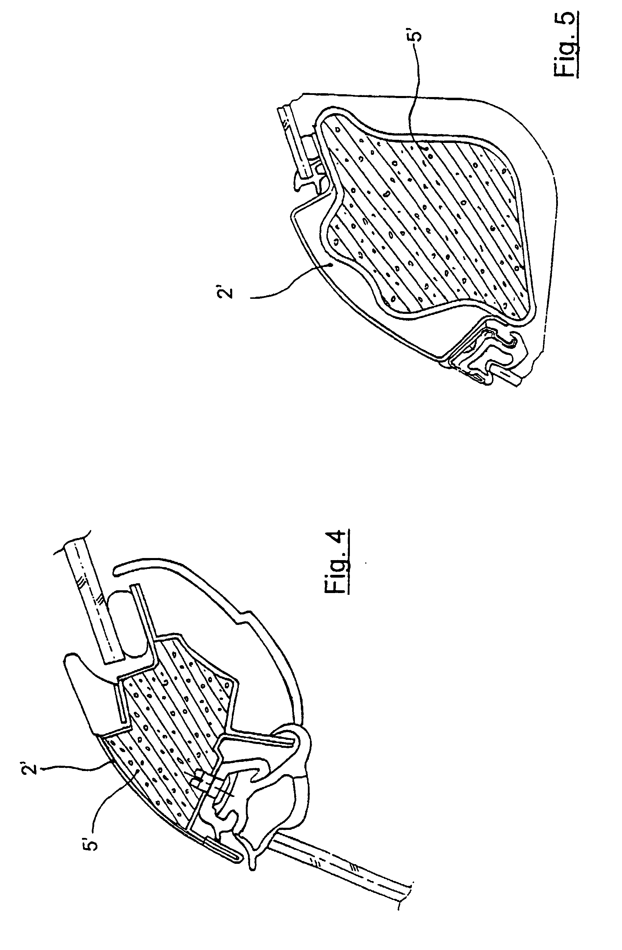

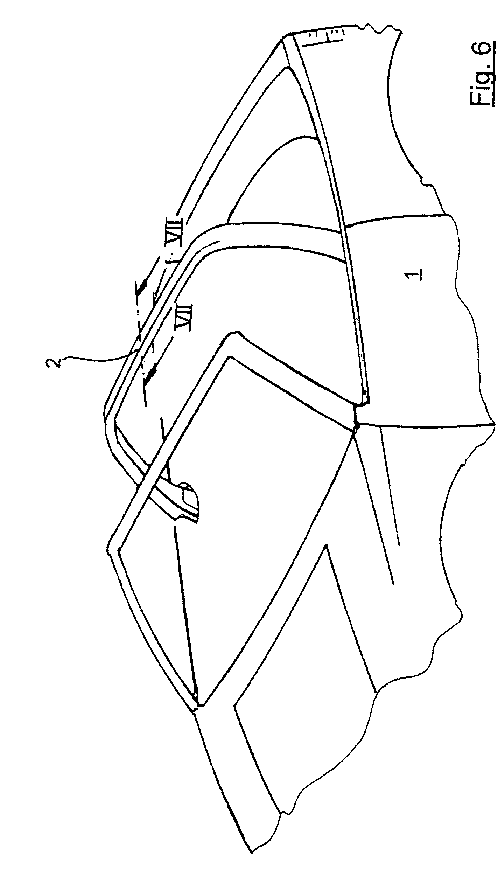

Die Fig. 3 bis 5 zeigen die Ausbildung eines Karosserieteils 2', das als Windschutzscheibenrahmen und daher ebenfalls als Profilträger ausgebildet ist und einen innenliegenden Hohlraum 3' ausbildet, der bereichsweise mit Aussteifungsteilen 5' aus metallischem Schaumwerkstoff, insbesondere Aluminiumschaum, angefüllt ist.

Für eine solche Ausbildung von Karosserieteilen 2' kommen nicht nur Profilrahmenträger in Frage, sondern es können auch andere Karosseriebereiche, insbesondere Hohlräume zwischen einem Innen- und einem Außenblech, wie beispielsweise in Türen oder in vorderen Bereichen der Motorhaube, ausgeschäumt werden, um hierdurch in aufprallgefährdeten Bereichen eine Verstärkung der Karosserie 1 zu bewirken, ohne einen Hohlbereich 3' vollständig ausschäumen zu müssen und dadurch das Gewicht der Karosserie 1 erheblich zu erhöhen.

Der ausgeschäumte Bereich 5' nimmt dabei nur einen Teil des Hohlraumes 3' ein, zwischen ausgeschäumten Bereichen 5' verbleiben signifikante Hohlbereiche, beispielsweise 20% des Hohlraumes 3', so daß insgesamt nur die Teile eines Karosserieteils 2', beispielsweise eines Windschutzscheibenrahmens oder Überrollbügels, mit metallischem Schaumwerkstoff angefüllt sind, die bei Einleitung von Kräften, wie sie bei einem Unfall auftreten, besonders beansprucht sind. Die verbleibenden Hohlbereiche bewirken gegenüber der Vollausschäumung eine Gewichtsreduzierung. Wenn das Karosserieteil 2' als Windschutzscheibenrahmen oder Überrollbügel ausgebildet ist, sind die Teile, die bei einem Überschlag mit vertikaler Krafteinleitung beansprucht werden, insbesondere die seitlichen Holme.

Ein solches Karosserieteil 2', das bereichsweise Aussteifungen aus metallischem Schaumwerkstoff aufweist, kann auch zusätzlich ein innenliegendes Strukturbauteil 4 aufweisen, so daß sich in ausgeschäumten Teilbereichen eine ähnliche Querschnittsdarstellung wie in Fig. 2 bzw. Fig. 7 ergibt. Damit kann einerseits die hohe Stabilitätsreserve aus dem innenliegenden Strukturbauteil 4, beispielsweise einem Rohr, genutzt werden, andererseits kann sich die großflächige Abstützung eines Profilrahmenträgers 2' an dem Rohr 4 auf die Bereiche beschränken, die Kräfte aufzunehmen haben. Eine Gesamtausschäumung des Zwischenraumes zwischen dem Rohr 4 und dem Profilrahmenträger 2' ist dabei nicht notwendig, so daß Gewicht eingespart werden kann. Eine solche bereichsweise Ausschäumung mit innenliegendem Strukturbauteil 4 bietet sich beispielsweise in Türen an, bei denen es eine hohe Gewichtszunahme bedeuten würde, einen großflächigen Zwischenraum zwischen einem Innen- und einem Außenbereich auszuschäumen.

Zur Bildung der beschriebenen Bauteile 2, 2' werden in den Hohlraum 3 des Profilrahmenträgers 2 bzw. Karosserieteils 2' Halbzeuge aus metallischem Schaumwerkstoff eingesetzt, die in den Profilrahmenträger 2 bzw. Karosserieteil 2' durch Erhitzen auf ihre Endgestalt fertiggeschäumt werden.

Die Endgestalt wird dabei zumindest von den Innenwandungen des Karosserieteils 2, 2' begrenzt. Das Halbzeug kann als primitiver Körper ausgebildet sein oder bereits eine Anpassung an die Form des Hohlraumes 3, 3' aufweisen, also endkonturnah vorbearbeitet sein. Das so eingebracht Halbzeug wird innerhalb des Karosserieteils 2, 2' auf seine Endgestalt fertiggeschäumt, indem es dort erhitzt wird.

Dieses Erhitzen kann auf verschiedene Weisen erfolgen, beispielsweise durch Induktion, Strahlungswärme, Wärmeleitung oder Konvektion und durch den Einsatz elektromagnetischer Wellen, wie sie beispielsweise in der Lasertechnik verwendet werden. Wenn in dem Profilrahmenträger 2 oder sonstigen Karosserieteil 2' ein innenliegendes Strukturbauteil 4 mit einem darin enthaltenden Hohlraum 6 angeordnet ist, so kann auch durch diesen Hohlraum 6 ein erhitztes Medium geleitet werden, wodurch der Zwischenraum zwischen dem Strukturbauteil 4 und dem äußeren Bauteil 2,2' erwärmt wird, so daß hier eine Schaumbildung des eingebrachten Halbzeuges erreicht wird.

Ein solches innenliegendes Strukturbauteil 4 kann auf seiner dem Hohlraum 3 zugewandten Außenseite mit einer Lage 7 aus aufzuschäumendem metallischem Werkstoff versehen sein. Diese Lage 7 muß sich nicht über die gesamte Länge des Strukturbauteils 4 erstrecken, sondern es ist möglich, auf diese Weise nur Bereiche des Hohlraumes 3 zwischen dem Profilrahmenträger 2 und dem innenliegenden Strukturbauteil 4 auszuschäumen, zwischen denen Hohlräume verbleiben, wie dies in Anspruch 8 dargestellt ist. Beim Erhitzen dieser Lage 7 sorgen dann die in dem Schaumwerkstoff enthaltenen Schaumbildner für ein Aufschäumen dieser Lage, so daß, wie im linken Teil der Fig. 2 dargestellt ist, am Ende des Erwärmungsvorgangs im Querschnitt der gesamte Hohlraum 3 dem Profilrahmenträger 2 und den innenliegenden Strukturbauteil 4 mit aufgeschäumtem Schaumwerkstoff 5 angefüllt ist, wobei der Schaumwerkstoff 5 metallische Bindungen zu dem ihn umgebenden Karosserieteil 2,2' ausgebildet. Damit ist eine Ausschäumung eines beliebigen Hohlraumquerschnitts ermöglicht. Eine Einschränkung an die Karosserieteilform entfällt. Eine endkonturnahe Vorfertigung der einzubringenden Halbzeuge ist nicht erforderlich.

Analog kann zusätzlich oder stattdessen die Innenwandung des Profilrahmenträgers 2 oder sonstigen Karosserieteils 2' mit einer Lage aus aufzuschäumenden metallischem Werkstoff versehen sein, wobei der Aufschäumvorgang dieses Werkstoffes dann durch das innenliegende Strukturbauteil 4 begrenzt wird.

Alternativ ist auch möglich, in den Hohlraum 3 einen oder mehrere einzelne Körper aus aufzuschäumendem metallischem Schaumwerkstoff einzubringen, die während des Erhitzens den Hohlraum 3 zumindest bereichsweise so weit ausschäumen, daß das Aufschäumen von der Innenwandung des Karosserieteils 2 bzw. 2' und des innenliegenden Strukturbauteils 4 begrenzt wird.

Insgesamt eröffnet dieses Verfahren die Möglichkeit, Teilbereiche eines Karosserieteils 2,2' derart auszusteifen, daß in diesen Bereichen-eine hohe Widerstandsfähigkeit gegen von außen einwirkende Kräfte bei geringstmöglichem Gewicht des Gesamtbauteils ermöglicht ist. Die Steifigkeit des Bauteils kann zudem durch ein innenliegendes Strukturbauteil 4 erhöht werden, das durch den metallischen Schaumwerkstoff flächig mit dem äußeren Karosserieteil 2,2' verbunden ist und daher einem großen Bereich von Krafteinleitungsrichtungen und Einleitungspunkten eine sehr hohe Knick- und Biegesteifigkeit entgegensetzt.

Neben der Anpassungsfähigkeit der einzubringenden Aussteifungselemente an die Anforderungen der statischen und dynamischen Belastung der Karosserieteile ist durch das erfindungsgemäße Verfahren gleichzeitig die Montage derart vereinfacht, daß verschiedenste Bereiche der Fahrzeugkarosserie flexibel im Montageprozeß mit innenliegenden Schaumwerkstoffen ausgesteift werden können.

## Patentansprüche

1. Profilrahmenträger (2) für Karosserien (1) von Kraftfahrzeugen, insbesondere Cabriolets, wobei der Profilrahmenträger (2) einen mit einem aufgeschäumten metallischen Schaumwerkstoff (5) ausgesteiften Hohlraum (3) umgrenzt, **dadurch gekennzeichnet, daß** im Innern des Hohlraums (3) ein sich in dessen Längsrichtung erstreckendes Strukturbauteil (4) angeordnet ist und daß der aufgeschäumte metallische Schaumwerkstoff (5) den Raum zwischen der Innenwand des Profilrahmenträgers (2) und dem darin liegenden Strukturbauteil (4) einnimmt.

2. Profilrahmenträger nach Anspruch 1, **dadurch gekennzeichnet, daß** das innenliegende Strukturbauteil (4) einen inneren Hohlbereich (6) ausbildet, der im wesentlichen dem Längsverlauf des Strukturbauteils (4) folgt.

3. Profilrahmenträger nach Anspruch 2, **dadurch gekennzeichnet, daß** das Strukturbauteil (4) im wesentlichen rohrförmige Gestalt hat.

4. Profilrahmenträger nach einem der Ansprüche 2 oder 3, **dadurch gekennzeichnet, daß** der Hohlbereich (6) des Strukturbauteils (4) derart ausgebildet ist, daß er als Kabelkanal nutzbar ist.

5. Karosserieteil (2') für Karosserien (1) von Kraftfahrzeugen, insbesondere Cabriolets, wobei das Karosserieteil (2') einen innenliegenden, metallischen Schaumwerkstoff (5') aufnehmenden Hohlraum (3') umgrenzt, **dadurch gekennzeichnet, daß** der innenliegende Hohlraum (3') in Längsrichtung mit Aussteifungsteilen aus metallischem Schaumwerkstoff (5') angefüllte Teilbereiche und zwischen einzelnen ausgesteiften Bereichen verbleibende Hohlbereiche aufweist, wobei die Aussteifungsteile mit Innenwandungen des Karosserieteils (2') über metallische Bindung verbunden sind.

6. Karosserieteil nach Anspruch 5, **dadurch gekengzeichnet,** daß die verbleibenden Hohlbereiche in Anpassung an die statischen und dynamischen Beanspruchungen einen signifikanten Anteil des von dem Karosserieteil (2') umgrenzten Hohlraumes (3') einnehmen.

7. Karosserieteil nach einem der Ansprüche 5 oder 6 bei Verwendung als Windschutzscheibenrahmen oder Überrollbügel, **dadurch gekennzeichnet, daß** die eingebrachten Aussteifungsteile aus metallischem Schaumwerkstoff (5') einen bei vertikaler Krafteinleitung beanspruchten Bereich des Windschutzscheibenrahmens oder Überrollbügels einnehmen.

8. Karosserieteil nach einem der Ansprüche 5 bis 7, **dadurch gekennzeichnet, daß** das Karosserieteil (2') als Profilrahmenträger (2) ausgebildet ist und im Innern des Hohlraums (3) ein sich in dessen Längsrichtung erstreckendes Strukturbauteil (4) angeordnet ist.

9. Verfahren zur Aussteifung von Bereichen von Karosserieteilen, insbesondere von Profilrahmenträgern von Kfz-Karosserien, wobei die auszusteifenden Karosserieteile einen innenliegenden Hohlraum umgrenzen, und in einen Teilbereich des innenliegenden Hohlraums ein vorbereitetes Halbzeug aus Schaumwerkstoff eingesetzt und dann durch Erhitzen auf seine von zumindest den Innenwandungen des Karosserieteils begrenzte Endgestalt fertiggeschäumt wird, **dadurch gekennzeichnet, daß** der Schaumwerkstoff ein metallischer Schaumwerkstoff ist.

10. Verfahren nach Anspruch 9, **dadurch gekennzeichnet, daß** das einzubringende Halbzeug in Anpassung an die Form des Hohlraumes endkonturnah ausgebildet ist.

11. Verfahren nach einem der Ansprüche 9 oder 10, **dadurch gekennzeichnet, daß** in den innenliegenden Hohlraum ein Strukturbauteil eingebracht und der Zwischenraum zwischen diesem und den Innenwandungen des umgebenden Karosserieteils ausgeschäumt wird.

12. Verfahren nach Anspruch 11, **dadurch gekennzeichnet, daß** vor Einführung des innenliegenden Strukturbauteils dieses außenseitig zumindest bereichsweise mit einer Lage aus aufzuschäumendem metallischem Werkstoff versehen wird.

13. Verfahren nach einem der Ansprüche 9 bis 12, **dadurch gekennzeichnet, daß** die den innenliegenden Hohlraum umgrenzenden Karosserieteile vor ihrer Montage zumindest bereichsweise mit einer Lage aus aufzuschäumendem metallischem Werkstoff versehen werden.

14. Verfahren nach einem der Ansprüche 11 bis 13 zur Herstellung von Bauteilen nach einem der Ansprüche 1 bis 4, **dadurch gekennzeichnet, daß** in den Zwischenraum zwischen dem Strukturbauteil und Innenwandungen des Profilrahmenträgers ein einen metallischen Schaumwerkstoff enthaltender Körper eingebracht und aufgeschäumt wird, wobei das innenliegende Strukturbauteil und Innenwandungen des Profilrahmenträgers als den Aufschäumvorgang begrenzende Aufschäumform verwendet werden.

## Claims

1. Frame member (2) for bodies (1) of motor vehicles, particularly convertibles, with the frame member (2) forming the surround of a cavity (3) stiffened by expanded metallic foamed material (5), **characterised in that** within the cavity (3) a structural component (4) extends in the longitudinal direction of the cavity and the expanded metallic foamed material (5) takes up the space between the inside wall of the frame member (2) and the structural component (4) within it.

2. Frame member in accordance with claim 1, **characterised in that** the inside structural component (4) forms an internal hollow area (6) that essentially follows the longitudinal run of the structural component (4).

3. Frame member in accordance with claim 2, **characterised in that** the structural component (4) is essentially tubular in shape.

4. Frame member in accordance with one of claims 2 or 3, **characterised in that** the hollow area (6) of the structural component (4) is designed in such a way that it can be used as a cable duct.

5. Body part (2') for bodies (1) of motor vehicles, particularly convertibles, where the body part (2') forms the boundary of an inner cavity (3') holding metallic foamed material (5'), **characterised in that** the inner cavity (3') has part areas filled in the longitudinal direction with stiffening parts of metallic foamed material (5') and has remaining hollow areas between individual stiffened areas, with the stiffened parts being connected to the inner wall of the body part (2') by a metallic connection.

6. Body part in accordance with claim 5, **characterised in that** the remaining hollow areas occupy a significant part of the cavity (3') enclosed by the body part (2') matched to the static and dynamic stresses.

7. Body part in accordance with one of claims 5 or 6, where used as a windshield frame or roll bar, **characterised in that** the introduced stiffening parts of metallic foamed material (5') occupy a stressed area of the windshield frame or roll bar where the force introduction is vertical.

8. Body part in accordance with one of claims 5 to 7, **characterised in that** the body part (2') is designed as a frame member (2) and that in the inside of the cavity (3) a structural component (4) is arranged extending in its longitudinal direction.

9. Method for stiffening areas of body parts, particularly frame members of motor vehicle bodies, whereby the stiffening body parts enclose an internal cavity and **characterised in that** a prepared semi-finished product of foamed material is inserted into a part area of the internal cavity and by heating is finally expanded to a final shape bounded at least by the inner wall of the body part, and that the foamed material is a metallic foamed material.

10. Method in accordance with claim 9, **characterised in that** the semi-finished product to be introduced is designed to have a final contour approximately matched to the shape of the cavity.

11. Method in accordance with one of claims 9 or 10, **characterised in that** a structural component is fitted in the inner cavity and that the space between this and the inner walls of the surrounding body part is filled with expanded foam.

12. Method in accordance with claim 11, **characterised in that** before introduction of the inner structural component its outside is provided, at least in areas, with a layer of expandable metallic material.

13. Method in accordance with claims 9 to 12, **characterised in that** the body parts enclosing the internal cavity are provided before their assembly, at least in some areas, with a layer of expandable metallic material.

14. Method in accordance with one of claims 11 to 13 for the manufacture of components in accordance with one of claims 1 to 4, **characterised in that** a body containing a metallic foamed material is placed in the space between the structural component and inner walls of the frame member and is expanded, with the inside structural component and inner walls of the frame member being used as the shape to limit the expansion of the foam.

## Revendications

1. Poutre profilée de châssis (2) pour carrosserie (1) de véhicule automobile, notamment cabriolet, cette poutre (2) ayant une cavité (3) rigidifiée par une mousse métallique expansée (5),
**caractérisée en ce qu'**
à l'intérieur de la cavité, une pièce de structure (4) s'étend dans la direction longitudinale et
la mousse métallique (5) occupe le volume entre la paroi intérieure de la poutre profilée de châssis (2) et la pièce de structure (4) qui s'y trouve.

2. Poutre profilée de châssis selon la revendication 1,
**caractérisée en ce que**
la pièce de structure (4) placée à l'intérieur de celle-ci forme une zone creuse intérieure (6) essentiellement selon le tracé longitudinal de la pièce de structure (4).

3. Poutre profilée de châssis selon la revendication 2,
**caractérisée en ce que**
la pièce de structure (4) a une forme essentiellement tubulaire.

4. Poutre profilée de châssis selon l'une quelconque des revendications 2 ou 3,
**caractérisée en ce que**
la zone creuse (6) de la pièce de structure (4) forme un canal de passage de câbles.

5. Pièce de carrosserie (2') pour une carrosserie (1) de véhicule, notamment cabriolet, cette pièce (2') délimitant une cavité (3') recevant une mousse métallique intérieure (5'),
**caractérisée en ce que**
la cavité intérieure (3') comporte, dans la direction longitudinale, des zones partielles remplies de pièces de rigidification en mousse métallique (5') et entre différentes zones restant à rigidifier, les pièces de rigidification étant reliées à la paroi intérieure de la pièce de carrosserie (2') par des liaisons métalliques.

6. Pièce de carrosserie selon la revendication 5,
**caractérisée en ce que**
les zones creuses résiduelles occupent une partie significative de la cavité (3') délimitée par la pièce de carrosserie (2') en s'adaptant aux sollicitations statiques et dynamiques.

7. Pièce de carrosserie selon l'une quelconque des revendications 5 ou 6, appliquée à un encadrement de pare-brise ou à un arceau de protection,
**caractérisée en ce que**
les pièces de rigidification insérées, en mousse métallique (5'), occupent la zone du cadre de pare-brise ou de l'arceau de protection lorsqu'une force verticale est appliquée.

8. Pièce de carrosserie selon l'une quelconque des revendications 5 à 7,
**caractérisée en ce que**
la pièce de carrosserie (2') est réalisée en forme de poutre profilée de châssis (2) et à l'intérieur de la cavité (3) elle comporte une pièce de structure (4) s'étendant dans la direction longitudinale de la cavité.

9. Procédé de rigidification de zones de pièces de carrosseries, notamment de poutres profilées de châssis de carrosseries de véhicules automobiles, les pièces de carrosserie à rigidifier délimitant une cavité intérieure et dans une zone partielle de la cavité située à l'intérieur, on a un produit semi-fini, préparé, en mousse, et par élévation de température on termine l'expansion pour lui donner la forme finale délimitée au moins par les parois intérieures de la pièce de carrosserie,
**caractérisé en ce que**
la mousse est une mousse métallique.

10. Procédé selon la revendication 9,
**caractérisé en ce que**
le produit semi-fini à mettre en place est adapté à la forme de la cavité par une forme proche du contour final.

11. Procédé selon l'une quelconque des revendications 9 ou 10,
**caractérisé en ce que**
dans la cavité intérieure on a intégré une pièce de structure et on a expansé le volume intérieur entre cette pièce et les parois intérieures de la pièce de carrosserie environnante.

12. Procédé selon la revendication 11,
**caractérisé en ce qu'**
avant d'introduire la pièce de structure placée à l'intérieur, celle-ci reçoit sur son côté extérieur, au moins par zones, une couche de matière métallique à expanser.

13. Procédé selon l'une quelconque des revendications 9 à 12,
**caractérisé en ce que**
les pièces de carrosserie, qui délimitent la cavité située à l'intérieur, sont munies avant leur montage au moins par zones, d'une couche de matière métallique à expanser.

14. Procédé selon l'une quelconque des revendications 11à 13, pour la fabrication de pièces selon l'une des revendications 1 à 4,
**caractérisé en ce que**
dans l'intervalle compris entre la pièce de structure et la paroi intérieure de la poutre profilée de carrosserie, on introduit un corps contenant une mousse métallique et on fait expanser et la pièce de structure située à l'intérieur et les parois intérieures de la poutre profilée de carrosserie sont utilisées comme moule d'expansion qui limite l'opération d'expansion.
